# DEMANDE DE BREVET EUROPEEN

(11) **EP 3 026 022 A1**
(43) Date de publication de la demande: **01.06.2016**
(21) Numéro de dépôt: 15196649.6
(22) Date de dépôt: 27.11.2015
(51) Int. Cl.: C02F 1/463, C02F 1/74, C02F 3/12, C02F 9/00

(54) **MICRO-STATION D'EPURATION BIOLOGIQUE**

(30) Priorité: 28.11.2014 FR 1461657
(71) Demandeur: Viennet, Martial Gaston Marie, 31280 Dremil-Lafage (FR); S.M.V.E., 31280 Dremil-Lafage (FR)
(72) Inventeur: Viennet, Martial Gaston Marie, 31280 DREMIL-LAFAGE (FR)
(74) Mandataire: Regimbeau

(57) **Abrégé**

La présente invention concerne une station d'épuration individuelle, comprenant une cuve incluant un compartiment d'aération, un compartiment d'électrolyse et un compartiment de clarification, caractérisée en ce que la cloison séparant le compartiment d'aération du compartiment d'électrolyse comprend dans sa partie inférieure un orifice destiné au passage des eaux à épurer et permettant le retour des matières floculées et en ce que la cloison séparant le compartiment d'électrolyse du compartiment de clarification forme en sa partie inférieure une surface inclinée constituant le fond dudit compartiment d'électrolyse dont la déclivité est dirigée vers ledit orifice.

## Description

Le domaine de l'invention concerne la conception et la fabrication des équipements de traitement des eaux usées. Plus précisément, l'invention concerne une station d'épuration individuelle.

Dans le cadre de l'assainissement non collectif, on distingue les habitations reliées au réseau de collecte de leur commune et celles qui ne le sont pas.

Les règlementations imposent désormais aux habitations non reliées au réseau de collecte de leur commune de disposer d'un système d'assainissement individuel, visant à renvoyer au milieu naturel les eaux traitées d'une qualité satisfaisante.

Pour les particuliers non reliés au réseau de collecte de leur commune, il s'agit dès lors de recourir à l'installation d'une micro-station d'épuration.

Une micro-station d'épuration peut se définir comme une solution de traitement des eaux usées domestiques, fonctionnant à échelle réduite selon le même principe qu'une station d'épuration urbaine, ceci par la mise en oeuvre d'un procédé dit « à boue activée ».

Le traitement biologique dit « à boues activées » utilise les micro-organismes ou bactéries naturellement présents dans l'eau pour transformer et dégrader les matières organiques. Moins risqué pour l'homme et la nature que les procédés chimiques, il permet de rejeter les eaux traitées dans le milieu naturel et/ou de réutiliser l'eau pour l'irrigation ou l'arrosage.

Le traitement biologique comprend traditionnellement plusieurs phases de traitement.

Une première étape de décantation vise à la séparation des matières en suspension et permet le piégeage des matières les plus lourdes en fond de cuve. Les effluents décantés sont ensuite redirigés vers le bassin de réaction et d'aération (2).

Lors de la seconde étape de réaction les boues activées en suspension vont subir un premier traitement d'épuration. En créant de manière séquentielle des périodes aérobie - où l'on apporte de l'oxygène - et des périodes d'anoxie - où l'on prive les bactéries d'oxygène ; elles vont successivement digérer les matières organiques puis réduire les nitrates et les nitrites.

La dernière étape est la clarification qui permet de séparer les éventuelles boues légères persistantes de l'eau épurée. Les boues légères sont renvoyées dans le premier bassin de décantation et l'eau épurée est dispersée dans le sol, à l'extérieur de la station, par un système d'irrigation souterraine ou rejetée en milieu naturel.

Les avantages des micro-stations sont notamment l'absence de produit chimique et la mise en oeuvre de procédés de traitement écologiques des eaux usées. En outre, la surface au sol d'une micro-station est limitée et ne nécessite pas d'épandage sous-terrain. Enfin, la fréquence de vidange des boues est peu élevée comparée à celle d'une fosse septique.

Le traitement « à boue activée » implique un apport régulier de matières organiques pour permettre aux bactéries de se développer et donc de traiter les eaux. Aussi, une absence prolongée d'écoulement d'eau dans la micro-station impliquera la nécessité de réactivation des bactéries.

Selon une alternative, les micro-organismes chargés du traitement peuvent être fixés sur un support inerte servant à l'adsorption desdits microorganismes. Un tel support peut être disposé au sein de l'enceinte d'oxygénation, cependant la mise en place d'un support en matériau inerte complexifie la mise en oeuvre et augmente sensiblement le coût de fabrication.

Les eaux usées comprennent les eaux-vannes et les eaux ménagères, et peuvent contenir des produits chimiques, des détergents, de l'ammoniaque, des matières organiques, des déchets solides, en suspension et/ou en solution.

Pour l'épuration de ces eaux usées, on connaît déjà des micro-stations d'épuration, constituées par des cuves en général cylindriques de volume 1 à 3 m³ environ, et qui sont équipées de moyens d'oxygénation des eaux et de décantation.

Dans la technique connue, les moyens d'oxygénation sont constitués soit par un compresseur, entraîné par un moteur électrique associé à une horloge de programmation, et envoyant de l'air au fond de la cuve. Dans d'autres cas, ces moyens d'oxygénation comprennent un moteur électrique, associé à une horloge de programmation, entraînant une turbine qui crée un brassage d'eau avec formation d'air dans le liquide.

Afin d'améliorer l'épuration des effluents, en particulier des effluents industriels et des eaux usées municipales particulièrement chargées en polluant, on applique un traitement par action directe du courant électrique au cours d'une étape d'électrolyse ou d'électro floculation.

Le principe de base consiste à faire passer un courant électrique à travers l'eau à traiter. On se sert d'une anode (électrode négative) en aluminium qui, en se décomposant, produit un coagulant. L'effet du courant électrique casse les liaisons chimiques des métaux complexés et permet également de réaliser une pré-polarisation des molécules.

Les eaux usées passent entre des paires d'électrodes métalliques (Al - Fe ou Fe - Fe) alimentées par un générateur. Grâce au courant électrique, les complexes métalliques dissouts sont insolubilisés et coagulés. En plus, les anodes sacrificielles en aluminium forment un coagulant (Al⁺⁺⁺) qui accélère le processus. Les boues, ou floculats, extrêmement denses qui en résultent sont généralement séparées par filtration ou décantation, par exemple.

Les micro-stations d'épuration par boue activée donnent globalement satisfaction selon les critères d'épuration actuels. Toutefois, on peut déplorer dans certains cas que le taux légal d'épuration des eaux ne soit pas atteint et que les eaux soient souvent rejetées à l'extérieur sans être parfaitement épurées, voire que la station fasse l'objet d'un départ de boue, ou soit victime d'un rejet d'un produit d'entretien ménager qui neutralise les bactéries.

On a également constaté que la mise en mouvement des eaux usées, ou leur brassage, provoqué par les moyens d'oxygénation, entraînait dans certains cas des augmentations des mousses de détergent.

En particulier, le document WO9603352 décrit une installation de traitement des eaux usées par aération, électro-floculation et sédimentation. Cependant, dans cette installation les électrodes pour électro-floculation sont disposées dans le même compartiment que là où est effectuée l'aération et en particulier à l'aplomb du système d'agitation. Ainsi, les floculats issus de l'électro-floculation ne sédimentent pas facilement car ils sont soumis à une mouvement d'agitation perpétuel, tant par le brassage que par l'aération. Une seule chambre de sédimentation est disposée en aval de la chambre ou s'effectuent aération et électrofloculation et les floculats sont renvoyés par un plan incliné dans cette chambre d'aération et d'électrofloculation. Ainsi constituée, une telle installation ne permet jamais de faire sédimenter correctement les matières en suspension et en particuliers les floculats qui contribuent à la formation de mousses par exemple. Il serait opportun de pouvoir vidanger en partie des installation de traitement des eaux par simple pompage des floculats afin de permettre un fonctionnement avec un meilleur rendement.

La présente invention a précisément pour but de résoudre les problèmes posés par ces micro-stations de la technique antérieure, et d'en éviter les inconvénients.

L'invention a encore pour objet une station d'épuration des eaux usées pour des habitations individuelles, permettant d'atteindre en continu une épuration sensiblement parfaite des eaux usées et ce, dans un volume le plus réduit possible.

L'invention concerne généralement une station d'épuration des eaux usées - eaux-vannes et ménagères - en particulier pour des habitations individuelles, pour un nombre d'usagers, ou équivalent habitant (EH), pouvant varier de 1 à 10 environ par exemple, et qui est destinée à assurer l'épuration de toutes les eaux usées provenant d'une habitation individuelle. Cependant, dans le cadre d'un habitat collectif, une station selon l'invention dimensionnée adéquatement et/ou la mise en place de plusieurs stations selon l'invention pourra permettre de traiter les eaux usées d'un habitat collectif de type résidence comportant plusieurs appartements.

Ainsi, dans un premier mode de réalisation, la présente invention concerne une station d'épuration individuelle, comprenant une cuve (1) incluant au moins trois compartiments successifs séparés par des cloisons ; un compartiment d'aération (2), un compartiment d'électrolyse (3) et un compartiment de clarification (4), les eaux à épurer entrant dans le compartiment d'aération (2) par un conduit d'entrée (5) des eaux usées disposé en partie haute, passant du compartiment d'électrolyse (3) au compartiment de clarification (4) par débordement et sortant du compartiment de clarification (4) par un conduit de sortie (6) des eaux épurées en traversant successivement les trois compartiments, les deux conduits (5, 6) étant placés tous les deux au niveau supérieur de la cuve, le conduit d'entrée (5) étant disposé plus haut que le conduit de sortie (6) ; caractérisée en ce que la cloison (7) séparant le compartiment d'aération (2) du compartiment d'électrolyse (3) comprend dans sa partie inférieure un orifice (8) destiné au passage des eaux à épurer du compartiment d'aération (2) vers le compartiment d'électrolyse (3) et permettant le retour des matières floculées vers le compartiment d'aération (2) et en ce que la cloison (9) séparant le compartiment d'électrolyse (3) du compartiment de clarification (4) forme en sa partie inférieure une surface inclinée (10) constituant le fond dudit compartiment d'électrolyse (3) et dont la déclivité est dirigée vers l'orifice (8) de la cloison séparant le compartiment d'aération (2) du compartiment d'électrolyse (3).

Dans un second mode de réalisation, la présente invention concerne une station d'épuration individuelle caractérisée en ce que le compartiment de clarification (4) est cloisonné en deux compartiments ; un premier en communication avec le compartiment d'électrolyse (3) servant à une pré-clarification et un second séparé du premier par une cloison siphoïde (11).

Dans un troisième mode de réalisation, la présente invention concerne une station d'épuration individuelle selon le second mode de réalisation, caractérisée en ce que le premier compartiment servant à la pré-clarification comprend un circuit de recirculation muni d'une pompe (12) qui renvoie les matières vers le compartiment d'aération (2).

Dans un quatrième mode de réalisation, la présente invention concerne une station d'épuration individuelle, caractérisée en ce que le compartiment d'électrolyse (3) comprend une cellule d'électrolyse (13) comprenant au moins une cathode (14) (14) et au moins une anode (15).

Dans un cinquième mode de réalisation, une station d'épuration selon l'invention est caractérisée en ce que la cathode (14) et l'anode (15) sont sous la forme de plaques verticales parallèles aux cloisons de la cuve.

Dans un sixième mode de réalisation, une station d'épuration selon l'invention est caractérisée en ce que cathode (14) et anode (15) sont dans un matériau choisi parmi le fer et l'aluminium.

C'est aussi un septième mode de réalisation de l'invention que de fournir une station d'épuration caractérisée en ce que la partie supérieure de la cloison séparant le compartiment d'électrolyse (3) du compartiment de clarification (4) comprend au voisinage d'un de ses bords latéraux, une ouverture (16) permettant le passage des eaux par débordement du compartiment d'électrolyse (3) vers le compartiment de clarification (4).

Dans un huitième mode de réalisation, une station d'épuration selon la présente invention est caractérisée en ce que le compartiment d'aération (2) comprend dans sa partie supérieure une zone d'oxygénation (17) pourvue de moyens d'oxygénation et une zone tranquille (18) dans sa partie basse.

Un neuvième mode de réalisation de la présente invention vise aussi une station d'épuration caractérisée en ce que l'orifice (8) destiné au passage des eaux à épurer du compartiment d'aération (2) vers le compartiment d'électrolyse (3) est disposé au-dessus de la zone tranquille (18).

Selon un dixième mode de réalisation de la présente invention, une station d'épuration selon l'invention est caractérisée en ce que la surface inclinée (10) forme un angle avec l'horizontale compris entre 10 et 50°, particulièrement entre 15 et 45°, plus particulièrement encore entre 20 et 40°.

La notion de trois compartiments successifs s'entend que les eaux à épurer entrent dans le compartiment d'aération (2), puis passent dans le compartiment d'électrolyse (3) et ensuite dans le compartiment de clarification (4).

Ainsi, grâce à l'invention, on obtient une station d'épuration individuelle produisant une eau traitée de meilleure qualité qu'avec les stations d'épuration individuelles de l'art antérieur, ceci en toutes circonstances.

En effet, les actions combinées de l'aération/clarification d'une part et, d'autre part, de l'électrolyse, conduit à un traitement optimal des eaux usées domestiques. On note de plus que la floculation obtenue dans le compartiment d'électrolyse (3) permet de réduire la charge en matières en suspension des effluents atteignant le compartiment de clarification. Enfin, les floculats inertes redirigés vers le compartiment d'aération (2) servent de matériau support pour le développement bactérien ce qui augmente le rendement d'activation biologique de la station selon l'invention.

Dans un mode de réalisation particulier de l'invention, le compartiment de clarification (4) est cloisonné en deux compartiments ; un premier, en communication avec le compartiment d'électrolyse (3) disposé en amont, servant à une pré-clarification et un second séparé par une cloison siphoïde (11).

Dans un mode encore particulier de réalisation, le premier compartiment servant à la pré-clarification comprend des moyens de recirculation comprenant une pompe qui renvoie les matières accumulées vers le compartiment d'aération (2).

A ses deux extrémités longitudinales opposées, la cuve comprend un conduit d'entrée (5) des eaux usées qui débouche dans le compartiment d'aération (2), et un conduit de sortie des eaux épurées qui débouche du compartiment de clarification. Ces deux conduits sont placés tous les deux au niveau supérieur de la cuve et le conduit d'entrée (5) est disposé plus haut que le conduit de sortie afin de permettre un écoulement gravitationnel des eaux depuis l'entrée vers la sortie.

Le conduit d'entrée (5) des eaux usées débouche dans la partie haute du compartiment d'aération (2) et peut être équipé d'un déflecteur.

Le compartiment d'aération (2) comprend une zone d'oxygénation comprenant des moyens d'oxygénation (19) et une zone tranquille. L'oxygénation peut être effectuée grâce à l'injection de microbulles d'air via au moins un diffuseur (19) connecté à un compresseur (20), par exemple.

Typiquement, le fonctionnement du diffuseur d'air pendant 5 à 59 minutes, particulièrement pendant 10 à 45 minutes, plus particulièrement encore pendant 15 à 30 minutes, toutes les heures, permet une oxygénation optimale du milieu. On pourra régler la durée de diffusion d'air selon le degré de pollution des effluents, en fonction du débit des eaux usées ou en fonction du nombre d'occupants.

Le compresseur connecté au diffuseur peut être programmé afin d'effectuer des cycles successifs d'aération (2) des eaux présentes dans la zone d'oxygénation (17) du compartiment d'aération (2).

En effet, ce compartiment a pour but d'effectuer des phases successives d'aérobie et d'anoxie dans le but de provoquer une digestion des matières organiques présentes dans les eaux à traiter.

Un système de contrôle en boucle indexé sur la mesure de la charge en polluants, sur le nombre de personnes du foyer traité ou encore par rapport à la période de l'année pourra être installé afin de faire varier la durée des cycles d'aération (2) selon ces paramètres influençant la charge de la station d'épuration.

La zone d'oxygénation peut représenter entre 60 et 95 % du volume du compartiment d'aération (2), particulièrement entre 75 et 90 % du volume du compartiment d'aération (2).

Les matières les plus lourdes tombent par gravité vers le fond du compartiment d'aération (2) et sédimentent dans la zone tranquille (18) disposée inférieurement par rapport aux moyens d'oxygénation.

La séparation des deux compartiments permet de créer une zone tranquille dans le compartiment d'aération en dessous du débouché du plan incliné renvoyant les floculats issus du compartiment d'électro-foculation. Cette zone tranquille ainsi créée par cette séparation forme une chambre de digestion aérobie des matières organiques par les bactéries ayant trouvé un support sur les floculats retombant depuis la chambre d'électro-floculation et permet donc une meilleure efficacité et ce par rapport aux techniques connues dans l'art antérieur. En effet, le milieu d'oxygénation est beaucoup moins chargé en particules en suspension car celles-ci sédimentent du fait de l'électro-floculation et s'accumulent dans la zone tranquille. Aussi une simple aspiration-pompage des matières sédimentées dans cette zone à intervalles réguliers permet d'assurer une maintenance aisée et simple du dispositif selon la présente invention.

Cette zone d'oxygénation (17) forme une chambre de digestion aérobie bactériologique des matières organiques transportées par les eaux usées. Ces matières sont digérées et/ou absorbées par les bactéries présentes dans le compartiment d'aération (2) et dont l'entretien est favorisé par ladite aération.

Les eaux à épurer vont être oxygénées dans le bouillonnement composé de milliers de bulles d'air produit par des moyens d'oxygénation (19), par exemple au moins un diffuseur pouvant se trouver au fond de la zone d'oxygénation du compartiment d'aération (2) et disposé au-dessus de la zone tranquille (18).

La cloison transversale verticale (7) qui sépare le compartiment d'aération (2), plus particulièrement la zone d'oxygénation dudit compartiment, du compartiment d'électrolyse (3) comprend dans sa partie inférieure, au-dessus du niveau de la zone tranquille (18) du compartiment d'aération (2), un orifice (8) destiné au passage des eaux du compartiment d'aération (2) vers le compartiment d'électrolyse (3) tout en permettant le retour des floculats depuis le compartiment d'électrolyse (3) vers la zone tranquille du compartiment d'aération (2).

Afin de faciliter ce retour des floculats, la cloison séparant le compartiment d'électrolyse (3) du compartiment de décantation forme une surface inclinée constituant le fond dudit compartiment d'électrolyse (3) et dont l'inclinaison est dirigée vers l'orifice (8) de la cloison de séparation (7) du compartiment d'aération (2) du compartiment d'hydrolyse (3).

La taille et la forme de l'orifice (8) n'est pas critique en soi. Il doit présenter une surface de passage suffisamment grande pour éviter les effets de turbulences lors du passage ascensionnel des effluents depuis la zone d'oxygénation (17) du compartiment d'aération (2) vers le compartiment d'électrolyse (3). En effet, la présence de turbulences dans le compartiment d'électrolyse (3) gênerait la retombée, par gravitation, des floculats et leur renvoi dans la zone tranquille (18) du compartiment d'aération (2).

La disposition, la taille et la forme de cet orifice (8) pourront donc être définis sans difficulté par l'homme du métier et ce afin d'assurer le passage amont-aval des effluents vers le compartiment d'électrolyse (3) tout en permettant la décantation et le passage retour des floculats depuis le compartiment d'électrolyse (3) vers la zone tranquille (18) du compartiment d'aération (2).

La forme de l'orifice (8) n'est pas critique et il peut s'agir d'une ouverture rectangulaire, carrée, ronde, ovale ou oblongue par exemple. De manière préférée elle est rectangulaire et sa longueur est parallèle au fond de la cuve. Dans le cas d'un orifice (8) ayant la forme d'une ouverture rectangulaire, elle peut s'étendre parallèlement au fond de la cuve sur tout ou partie de la largeur de la cuve.

Dans le cas d'un orifice (8) ayant la forme d'une ouverture ronde, ovale ou oblongue, la surface inclinée ne sera par rectiligne mais épousera la forme de cette ouverture et pourra être ainsi incurvée et concave. Une telle forme pourra aussi permettre le rassemblement des floculats dans la zone de concavité maximale, facilitant leur écoulement vers la zone tranquille par gravitation.

La surface inclinée (10) présente un angle d'inclinaison adéquat pour permettre le déversement des floculats vers la zone tranquille. La surface inclinée (10) forme un angle avec l'horizontale qui pourra ainsi être compris entre 10 et 50°, particulièrement entre 15 et 45°, plus particulièrement encore entre 20 et 40°.

Dans un mode de réalisation préféré, l'orifice (8) débouche au-dessus de la zone tranquille (18).

L'orifice (8) est en effet disposé au niveau de la cloison (7) à un niveau supérieur à celui de la zone tranquille (18) et ce pour des raisons évidentes afin de permettre l'accumulation des floculats dans ladite zone tranquille.

Le compartiment d'électrolyse (3) comprend une cellule d'électrolyse (13). Dans un mode de réalisation de la présente invention, la cellule d'électrolyse comprend au moins une anode (14) et au moins une cathode (15). Cathode (14) et anode (15) peuvent se présenter sous la forme de tiges ou préférentiellement sous la forme de plaques disposées parallèlement les unes aux autres et verticalement, c'est-à-dire aussi parallèlement aux cloisons de la cuve.

Dans un mode de réalisation de l'invention, le compartiment d'électrolyse (3) comprend une cellule d'électrolyse comprenant au moins une cathode (14) et au moins une anode.

Dans un mode de réalisation de l'invention, la cathode (14) et l'anode sont sous la forme de plaques verticales parallèles.

Cathode (14) et anode peuvent être dans un matériau choisi parmi le fer, l'aluminium par exemple.

Dans le cadre d'une cellule d'électrolyse constituée d'au moins deux plaques, c'est-à-dire une anode et une cathode (14), les plaques pourront être choisies sous la forme de couple Al-Fe, Al-Al ou Fe-Fe par exemple. L'action du courant entre les électrodes permet la libération d'ions métalliques (Al⁺⁺⁺ ou Fe⁺⁺) par oxydation à l'anode. Les ions métalliques ainsi libérés à l'anode vont se combiner avec les ions hydroxyles (OH⁻) libérés par l'électrolyse de l'eau et génèrent des hydroxydes métalliques (Al(OH)₃ et Fe(OH)₂).

Les hydroxydes formés favorisent la formation de floculats qui décantent et sédimentent par gravité.

Les effluents qui sortent du compartiment d'aération (2) en passant par l'orifice (8) disposé dans la partie basse de la cloison de séparation (7), suivent un écoulement ascendant et passent au travers de la cellule d'électrolyse (13).

L'application d'un champ électrique d'intensité comprise entre 3 et 25 ampères, particulièrement entre 3 et 15 ampères, plus particulièrement encore entre 5 et 10 ampères, permet la formation des floculats qui décantent et retombent comme expliqué plus avant dans la partie inférieure du compartiment d'électrolyse (3) et terminent leur course, via le plan incliné (10) et l'orifice (8), dans la zone tranquille (18) du compartiment d'aération (2).

L'application d'électricité pourra être contrôlée via un coffret commande (21) et une horloge déportée qui pourront aussi commander le compresseur (20) et le circuit d'électrolyse ainsi que celui de recirculation. L'application d'électricité, tant sa durée que son intensité, pourra être intermittente et par exemple via une application de 8 heures à 18 heures cumulées sur une journée. On pourra ainsi réaliser des mises en tension de le cellule d'électrolyse pendant 30 minutes, 60 minutes ou 90 minutes par exemple entre 6h00 du matin et 22h00 le soir, afin d'atteindre une durée d'électrolyse de 8 à 18 heures par jour environ, par exemple. Ces mises sous tension intermittentes peuvent être aisément programmées via une horloge et/ou un programmateur déporté. L'intensité pourra être comprise entre 3 et 25 ampères, particulièrement entre 3 et 15 ampères, plus particulièrement encore entre 5 et 10 ampères et permettra de floculer la majeure partie des particules en suspension et dissoutes. Bien sûr, cette intensité et cette durée pourront être modulées en fonction de l'état de pollution des effluents ainsi que du débit d'eaux usées, du nombre de personnes présentes dans le foyer, de la période de l'année et de tout facteur influant directement ou indirectement la charge polluante des effluents à traiter. Un système de contrôle en boucle indexé sur la mesure de la charge en polluants, sur le nombre de personnes du foyer traité ou encore par rapport à la période de l'année pourra être installé afin de faire varier durée et/ou intensité des cycles selon ces paramètres influençant la charge de la station d'épuration.

La cellule d'électrolyse (13) de la station d'épuration selon l'invention est d'un type classique et bien connu, en particulier du type utilisé dans l'industrie de l'électrolyse ou de l'électro-floculation et ne sera pas décrit plus en détail ici.

Le fonctionnement des électrodes (anode et cathode) sera préférentiellement intermittent, c'est-à-dire qu'elles seront alimentées en courant pendant quelques minutes par heure comme expliqué ci-avant et ce, au moyen d'une horloge de programmation associée à un relais prévu dans le lignes d'alimentation du transformateur.

La partie supérieure de la cloison transversale (9) séparant le compartiment d'électrolyse (3) du compartiment de clarification (4) peut comprendre au voisinage d'un de ses bords latéraux, une ouverture (16) permettant le passage des eaux par débordement du compartiment d'électrolyse (3) vers le compartiment de clarification. Alternativement, le passage des eaux du compartiment d'électrolyse (3) vers celui de clarification (4) peut se faire par débordement classique, c'est-à-dire sans passage par une ouverture aménagée dans la cloison.

Comme indiqué plus avant, le compartiment de clarification (4) peut être séparé en deux compartiments via une cloison verticale longitudinale (11) s'arrêtant avant le fond de la cuve et formant une cloison siphoïde (11).

Dans le fond du compartiment de clarification (4) - séparé ou non en deux - des moyens de recirculation comprenant une pompe (12) peuvent être disposés afin de renvoyer dans le compartiment d'aération (2) les particules accumulées qui n'auraient pas sédimenté précédemment au niveau du compartiment d'électrolyse (3).

Dans un cas particulier de réalisation, lorsque le compartiment de clarification (4) est scindé en deux, la pompe est disposée dans le second compartiment.

La notion de « premier » et de « second » s'entend ici dans le sens de l'écoulement et de la progression des effluents de l'entrée vers la sortie de la cuve d'une station selon l'invention.

Dans le cadre de la présente invention, on entend par paroi siphoïde ou cloison siphoïde, une paroi permettant de retenir a la surface d'un compartiment les flottants et les liquides plus légers que l'eau et ce, grâce à l'aménagement d'une ouverture dans la partie basse immergée de ladite cloison ou paroi. De manière particulière, une cloison siphoïde est une cloison dont la partie inférieure est ajourée sur une partie ou sur l'intégralité de sa largeur. De manière encore plus particulière, une cloison siphoïde est une cloison qui ne s'étend par jusqu'au fond du compartiment ce qui permet le passage des effluents par le bas.

Le fonctionnement d'une station d'épuration selon l'invention pourra être le suivant :
Les effluents sont amenés via le conduit d'entrée (5) et circulent lentement à l'intérieur du compartiment d'aération (2). Les plus grosses particules décantent par gravitation vers la zone tranquille (18) en fond de compartiment d'aération (2). Dans la zone d'oxygénation (17), les matières organiques sont digérées par les microorganismes. Un diffuseur (19) envoie par intermittence des bulles d'air dans la zone d'oxygénation (17). Les bulles remontant vers la surface permettent le développement bactériologique et le métabolisme aérobie. Le diffuseur (19) assurant la diffusion d'air par intermittence peut être commandé par un coffret de commande (21) et une horloge programmable, comme indiqué précédemment.
Les eaux sortant de la partie inférieure de la zone d'oxygénation (17) du compartiment d'aération (2) se dirigent vers le compartiment d'électrolyse (3) en passant à travers l'orifice (8) disposé dans le bas de la cloison séparative (7). Les eaux remontent vers la surface et passent entre cathode (14) et anode (15). Pendant cette remontée, et sous l'effet du champ électrique, les floculats se forment et retombent par gravitation et sont dirigés via la surface inclinée (10) vers le compartiment d'aération (2) et retombent dans le zone tranquille (18) dudit compartiment, disposée en dessous des moyens d'oxygénation.

Il convient de noter au passage un avantage particulier de la présente invention. En effet, les floculats issus de l'électrolyse constituent des particules inertes qui peuvent constituer des supports libres d'adsorption pour les bactéries présentes dans le compartiment d'aération (2).

La présence de tels supports et leur apport continu permet un excellent développement des bactéries qui trouvent ainsi un support adéquat à leur développement. Une telle caractéristique est particulièrement avantageuse car elle permet de s'affranchir de l'ajout de support d'adsorption pour la croissance des bactéries, supports en matériaux inertes onéreux et complexes à mettre en oeuvre. En outre, ces floculats étant issus du milieu même, leur apport peut se faire à l'infini ce qui permet de constituer un support de plus en plus important pour les bactéries. Même si les floculats s'accumulent dans la zone tranquille (18), les turbulences créées par l'aération permettent de les entraîner vers le haut.

Les eaux sortant de la cellule d'électrolyse (13) passent dans le compartiment de clarification (4) par débordement et sont déjà débarrassées de la quasi-totalité des contaminants en suspension ou en solution.

Comme indiqué plus avant, une seconde décantation peut se produire dans le compartiment de clarification (4). Cette seconde décantation peut se faire avantageusement dans une première zone de ce compartiment qui peut être équipée d'un système de recirculation comprenant une pompe (12) qui envoie les fines matières sédimentées vers le compartiment d'aération (2), afin de compléter la digestion. Les eaux ainsi épurées passent dans la seconde zone du compartiment de clarification (4) via une cloison siphoïde (11) et s'évacuent via le conduit de sortie (6).

A titre d'exemple, une cuve (1) d'une station selon l'invention pourra avoir un volume utile de 3 m³ par exemple, permettant de traiter les effluents de 1 à 9 personnes, avec une durée de séjour des eaux dans la cuve d'environ 24 heures. Pour un tel volume total de 3 m³, le compartiment d'aération (2) pourra occuper environ 1.5 m³, le compartiment d'électrolyse (3) environ 0.5 m³ et le compartiment de décantation environ 1 m³.

Une ouverture de visite pourra être aménagée sur le dessus de la cuve (1), afin de réaliser les opérations d'entretien courant. Un coffret de commande électrique (21) ainsi qu'un compresseur (20) pourront être disposés tant dans l'enceinte de la cuve dans le volume disponible entre la surface des eaux et la trappe que de manière déportée à l'intérieur de l'habitation ou d'un local technique dédié.

Le matériau de construction de la cuve pourra être choisi parmi le polyéthylène ou le polyester par exemple. Il conviendra de sélectionner un matériau isolant électriquement.

La mise en oeuvre d'une station d'épuration selon la présente invention permet une épuration complète des effluents sans génération d'odeurs et l'obtention d'une eau convenable à son épandage dans le milieu naturel, pour l'arrosage, voire pour une utilisation domestique hors consommation humaine ou animale.

La combinaison des moyens biologique et électrochimique dans un volume compact permet la purification en un temps record de la plupart des effluents domestiques.

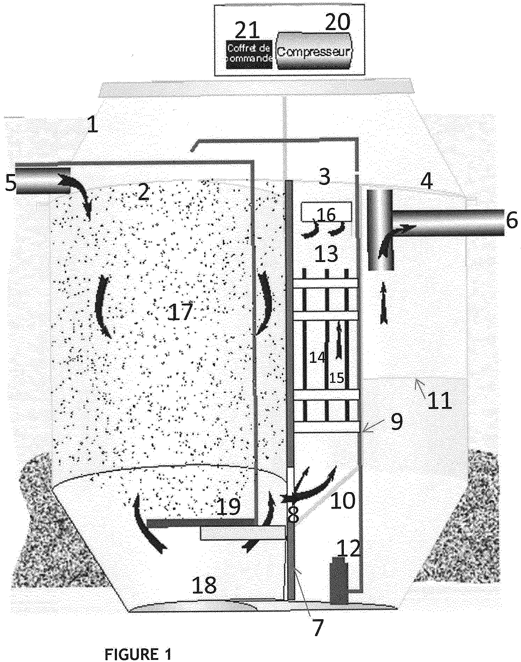

La figure 1 représente une station d'épuration selon l'invention en coupe verticale. On distingue le conduit d'entrée (5) connecté à la cuve (1) déversant les effluents dans le compartiment d'aération (2). Les bulles créées par la diffuseur (19) contribuent à l'oxygénation de la zone d'oxygénation (17) surplombant la zone tranquille (18). Les flèches figurent l'écoulement des fluides. Les eaux usées traversent ainsi la cloison (7) via l'orifice (8), remontent à travers le compartiment d'électrolyse (3) en passant à travers la cellule l'électrolyse (13) en subissent l'électrolyse via cathode (14) et anode (15). On distingue la cloison (9) inclinée dans sa partie inférieure (10) ce qui permet le retour des floculat d'électrolyse vers la zone tranquille (18). Les eaux passent dans le compartiment de clarification (4) via l'ouverture (16). Une cloison siphoïde (11) sépare ce compartiment de clarification (4) en deux. Une pompe de recirculation (12) renvoie les floculats vers le compartiment d'aération (2). Les eaux passent sous la cloison siphoïde (11) et sortent clarifiées via le conduit de sortie (6).

Les modes de réalisation ici décrits ne sauraient être limitatifs et n'ont été donnés qu'à titre d'exemple.

## Revendications

1. Station d'épuration individuelle, comprenant une cuve (1) incluant au moins trois compartiments successifs séparés par des cloisons ; un compartiment d'aération (2), un compartiment d'électrolyse (3) et un compartiment de clarification (4), les eaux à épurer entrant dans le compartiment d'aération (2) par un conduit d'entrée (5) des eaux usées disposé en partie haute, passant du compartiment d'électrolyse (3) au compartiment de clarification (4) par débordement et sortant du compartiment de clarification (4) par un conduit de sortie (6) des eaux épurées en traversant successivement les trois compartiment, les deux conduits (5, 6) étant placés tous les deux au niveau supérieur de la cuve, le conduit d'entrée (5) étant disposé plus haut que le conduit de sortie (6) ; **caractérisée en ce que** la cloison (7) séparant le compartiment d'aération (2) du compartiment d'électrolyse (3) comprend dans sa partie inférieure un orifice (8) destiné au passage des eaux à épurer du compartiment d'aération (2) vers le compartiment d'électrolyse (3) et permettant le retour des matières floculées vers le compartiment d'aération (2), **en ce que** la cloison (9) séparant le compartiment d'électrolyse (3) du compartiment de clarification (4) forme en sa partie inférieure une surface inclinée (10) constituant le fond dudit compartiment d'électrolyse (3) et dont la déclivité est dirigée vers l'orifice (8) de la cloison (7) séparant le compartiment d'aération (2) du compartiment d'électrolyse (3) et **en ce que** le compartiment d'aération (2) comprend dans sa partie supérieure une zone d'oxygénation (17) pourvue de moyens d'oxygénation (19) et une zone tranquille (18) dans sa partie basse.

2. Station d'épuration individuelle selon la revendication 1, **caractérisée en ce que** le compartiment de clarification (4) est cloisonné en deux compartiments ; un premier en communication avec le compartiment d'électrolyse (3) servant à une pré-clarification et un second séparé du premier par une cloison siphoïde (11).

3. Station d'épuration individuelle selon la revendication 2, **caractérisée en ce que** le premier compartiment servant à la pré-clarification comprend un circuit de recirculation muni d'une pompe (12) qui renvoie les matières vers le compartiment d'aération (2).

4. Station d'épuration individuelle selon l'une des revendications 1 à 3, **caractérisée en ce que** le compartiment d'électrolyse (3) comprend une cellule d'électrolyse (13) comprenant au moins une cathode (14) (14) et au moins une anode (15).

5. Station d'épuration selon la revendication 4, **caractérisée en ce que** la cathode (14) et l'anode (15) sont sous la forme de plaques verticales parallèles aux cloisons de la cuve.

6. Station d'épuration selon l'une des revendications 4 ou 5, **caractérisée en ce que** cathode (14) et anode (15) sont dans un matériau choisi parmi le fer et l'aluminium.

7. Station d'épuration selon l'une des revendications 1 à 6 **caractérisée en ce que** la partie supérieure de la cloison séparant le compartiment d'électrolyse (3) du compartiment de clarification (4) comprend au voisinage d'un de ses bords latéraux, une ouverture (16) permettant le passage des eaux par débordement du compartiment d'électrolyse (3) vers le compartiment de clarification (4).

8. Station d'épuration selon l'une des revendications 1 à 7, **caractérisée en ce que** l'orifice (8) destiné au passage des eaux à épurer du compartiment d'aération (2) vers le compartiment d'électrolyse (3) est disposé au-dessus de la zone tranquille (18).

9. Station d'épuration selon l'une des revendications 1 à 8, **caractérisée en ce que** la surface inclinée (10) forme un angle avec l'horizontale compris entre 10 et 50°, particulièrement entre 15 et 45°, plus particulièrement encore entre 20 et 40°.
